# EUROPÄISCHE PATENTSCHRIFT

(11) **EP 2 707 746 B1**
(45) Veröffentlichungstag und Bekanntmachung des Hinweises auf die Patenterteilung: **18.07.2018**
(21) Anmeldenummer: 12713908.7
(22) Anmeldetag: 20.03.2012
(51) Int. Cl.: G01B 17/00, G01V 1/00, G01S 15/93, G01S 7/527, G01S 7/529, G01S 7/534

(54) **ULTRASCHALL-MESSSYSTEM MIT VERRINGERTER MINIMALER REICHWEITE UND VERFAHREN ZUM DETEKTIEREN EINES HINDERNISSES**
ULTRASONIC MEASUREMENT SYSTEM HAVING REDUCED MINIMUM RANGE AND METHOD FOR DETECTING AN OBSTACLE
SYSTÈME DE MESURE À ULTRASONS À PORTÉE MINIMALE RÉDUITE ET PROCÉDÉ DE DÉTECTION D'UN OBSTACLE

(30) Priorität: 09.05.2011 DE 102011075484
(43) Veröffentlichungstag der Anmeldung: 19.03.2014
(73) Patentinhaber: Robert Bosch GmbH, 70442 Stuttgart (DE)
(72) Erfinder: KLOTZ, Albrecht, 71229 Leonberg (DE); SCHMID, Dirk, 75397 Simmozheim (DE); SCHUMANN, Michael, 70597 Stuttgart (DE); KARL, Matthias, 76275 Ettlingen (DE)
(86) Internationale Anmeldenummer: PCT/EP2012/054907
(87) Internationale Veröffentlichungsnummer: WO 2012/152493

(56) Entgegenhaltungen:
- JP-A- H07 104 063
- JP-A- 410 268 035
- US-A1- 2008 269 612
- US-A1- 2010 080 083

## Beschreibung

### Stand der Technik

Die vorliegende Erfindung betrifft ein Ultraschall-Messsystem zum Detektieren eines Hindernisses mit einem resonanten Wandlerelement zum Aussenden eines Ultraschallpulses und zum Empfangen eines von dem Hindernis reflektierten Ultraschall-Echopulses. Auch betrifft die Erfindung ein Fahrzeug mit einem solchen Ultraschall-Messsystem und ein Verfahren zum Detektieren eines Hindernisses mittels Ultraschall.

Ultraschallbasierte Messsysteme werden eingesetzt, um eine Distanz zu einem vor einem Sensor befindlichen Objekt zu vermessen. Die eingesetzten Ultraschallsensoren basieren in der Regel auf dem Puls-Echo-Verfahren. In diesem Betrieb sendet der Sensor einen Ultraschallpuls aus und misst die durch ein Objekt hervorgerufene Reflexion des Ultraschallpulses (Echo). Der Abstand zwischen dem Sensor und dem Objekt errechnet sich über die gemessene Echolaufzeit und die Schallgeschwindigkeit.

Zur Abstandsmessung wird das analoge Echosignal so ausgewertet, dass ein gültiges Echo genau dann vorliegt, wenn die gemessene Spannung des Echopulses einen Schwellwert für eine festgelegte Mindestdauer überschreitet.

Die Ultraschall-Sensoren fungieren dabei als Sende- und Empfangseinheit. Die Sensoren umfassen ein resonantes Wandlerelement, dessen Emissionsfrequenz auf die Resonanzfrequenz des Wandlers abgestimmt ist.

Aufgrund des resonanten Charakters des Wandlers kommt es bei der Sendeanregung zu Ein- und Ausschwingungen. Insbesondere die Ausschwingvorgänge führen zu einer Totzeit, in der Echos nicht detektiert werden können. Diese Totzeit ist gleichbedeutend mit einer minimalen Reichweite für den Sensor, die heute nicht unterschritten werden kann.

Wünschenswert wäre es, die minimale Reichweite zu verringern.

Bekannt ist es auch, wie die Totzeit durch eine frequenzmodulierte Anregung reduziert werden kann, wenn anstelle der Anregung mit der Resonanzfrequenz des Wandlers gezielt eine spezielle Anregung außerhalb der Resonanz, insbesondere am Ende der Anregung, stattfindet. Eine solche Anregung des Wandlers mit einer konstanten, von der Resonanzfrequenz verschiedenen Frequenz, insbesondere am Ende der Anregung, ist beispielweise aus dem Dokument DE 101 03 936 C2 bekannt. Somit lassen sich die Ausgangamplituden für das Ausschwingen reduzieren und damit auch die Ausklingzeit. Nachteilig dabei ist, dass solche Ultraschall-Messsysteme zum Erzeugen von sehr speziellen Sendeformen ausgebildet sind und dadurch auf diese sehr spezielle Sendeformen eingeschränkt sind.

JP 410 268 035 offenbart eine Vorrichtung zur Verringerung eines minimalen Objektabstandes bei der Abstandsmessung, indem eine von der Resonanzfrequenzen des verwendeten Wandlers unterschiedliche Anregungsfrequenz zur Aussendung von Wechselsignalen verwendet wird. In Abhängigkeit eines vordefinierten erkannten Abstandes wird die Anregungsfrequenz erneut angepasst.

US 2008/269612 A1 offenbart eine Ultraschalldiagnosevorrichtung, bei welcher eine Frequenzmodulation eines Hochfrequenzträgersignals vorgenommen wird, um anhand von Doppler-Informationen lebende Organismen untersuchen zu können.

US 2010/080083 A1 offenbart ein Verstärker zum Verstärken von Echos gesendeter Pulsen.

JP H07 104063 A offenbart, dass zum Messen eines Abstandes zu einem Objekt ein Schallimpuls verwendet wird, der mittels eines Chirps moduliert wird.

### Offenbarung der Erfindung

nach dem Aussenden des Ultraschallpulses weiter ein Ausschwingsignal mit seiner Resonanzfrequenz. Auch umfasst das Ultraschall-Messsystem eine Auswerteeinheit mit einer Steuereinrichtung, die dazu ausgebildet ist, das resonante Wandlerelement zum Ausenden des Ultraschallpulses mittels eines von der Steuereinrichtung erzeugten Sendesignals anzusteuern. Weiterhin ist die Steuereinheit des Ultraschall-Messsystem dazu ausgebildet, ein frequenzmoduliertes Sendesignal mittels eines Modulationssignals so zu erzeugen, dass sich die Signatur des Ultraschallpulses von der des Ausschwingsignals unterscheidet. Die Auswerteeinheit weist mindestens einen Korrelationsfilter auf, wobei der mindestens eine Korrelationsfilter dazu ausgebildet ist, das von dem resonanten Wandler erzeugte Signal mit dem Sendesignal zu korrelieren und ein entsprechendes Korrelationssignal zu

Das erfindungsgemäße Ultraschall-Messsystem zum Detektieren eines Hindernisses mit einem Ultraschallsensor weist ein resonantes Wandlerelement zum Aussenden eines Ultraschallpulses und zum Erzeugen eines Empfangssignals auf, das den von dem Hindernis reflektierten, als Echopuls bezeichneten, Ultraschallpuls umfasst. Das resonante Wandlerelement erzeugt nach dem Aussenden des Ultraschallpulses weiter ein Ausschwingsignal mit seiner Resonanzfrequenz. Auch umfasst das Ultraschall-Messsystem eine Auswerteeinheit mit einer Steuereinrichtung, die dazu ausgebildet ist, das resonante Wandlerelement zum Ausenden des Ultraschallpulses mittels eines von der Steuereinrichtung erzeugten Sendesignals anzusteuern. Weiterhin ist die Steuereinheit des Ultraschall-Messsystem dazu ausgebildet, ein frequenzmoduliertes Sendesignal mittels eines Modulationssignals so zu erzeugen, dass sich die Signatur des Ultraschallpulses von der des Ausschwingsignals unterscheidet. Die Auswerteeinheit weist mindestens einen Korrelationsfilter auf, wobei der mindestens eine Korrelationsfilter dazu ausgebildet ist, das von dem resonanten Wandler erzeugte Signal mit dem Sendesignal zu korrelieren und ein entsprechendes Korrelationssignal zu erzeugen. Die Auswerteeinheit ist weiterhin dazu ausgebildet, ein von dem Hindernis erzeugten Echopuls beim Vorliegen eines einen Schwellenwert überschreitenden Pegels oder eines Maximums des Korrelationssignals zu erkennen und einen Abstand zum Hindernis mittels einer Zeitperiode zwischen dem ausgesandten Ultraschalpuls und dem empfangenen Echopuls zu berechnen. Weiter weist das Modulationssignal eine sich mit der Zeit kontinuierlich ändernde Frequenz auf. Ferner ist die Steuereinrichtung dazu ausgebildet, das frequenzmodulierte Sendesignal mittels eines Chirps als Modulationssignal zu erzeugen. Weiter ist die Auswerteeinheit dazu ausgebildet, ein Hindernis beim Vorliegen einer mit mindestens einer Relativgeschwindigkeit erfolgten Relativbewegung zwischen dem Ultraschall-Messsystem und dem Hindernis anhand des von mindestens einem Korrelationsfilter erzeugten Korrelationssignals zu detektieren.

Erfindungsgemäß wird weiterhin ein Verfahren zum Detektieren eines Hindernisses mittels Ultraschall bereitgestellt. Bei dem erfindungsgemäßen Verfahren werden ein Ultraschallpuls mittels eines resonanten Wandlerelements ausgesendet, ein den von dem Hindernis reflektierte, als Echopuls bezeichneten, Ultraschallpuls umfassendes Empfangssignal mittels des resonanten Wandlerelements erzeugt, wobei nach dem Aussenden des Ultraschallpulses von dem resonanten Wandlerelement ein Ausschwingsignal mit der Resonanzfrequenz des resonanten Wandlerelemens erzeugt wird, und ein Sendesignal erzeugt, mit dem das resonante Wandlerelement zum Ausenden des Ultraschallpulses angesteuert wird. Weiterhin wird die Frequenz des Sendesignals mittels eines Modulationssignals so moduliert, dass sich die Signatur des Ultraschallpulses von der des Ausschwingsignals unterscheidet. Das vom resonanten Wandlerelement erzeugte Signal wird mit dem Sendesignal mittels der Korrelationsfunktion eines Korrelationsfilters korreliert, um ein entsprechendes Korrelationssignal zu erhalten. Dabei wird der Echopuls beim Vorliegen eines einen Schwellenwert überschreitenden Pegels oder eines Maximums des Korrelationssignals erkannt und ein Abstand zum Hindernis aus einer Zeitperiode zwischen dem ausgesandten Ultraschallpuls und dem empfangenen Echopuls und der Ultraschallgeschwindigkeit berechnet. Weiter weist das Modulationssignal eine sich mit der Zeit kontinuierlich ändernde Frequenz auf. Ferner wird das frequenzmodulierte Sendesignal mittels eines Chirps als Modulationssignal erzeugt. Weiter wird das Hindernis beim Vorliegen einer mit mindestens einer Relativgeschwindigkeit erfolgten Relativbewegung zwischen dem Ultraschall-Messsystem und dem Hindernis anhand des mittels der Korrelationsfunktion mindestens eines Korrelationsfilters erzeugten Korrelationssignals detektiert.

Die Unteransprüche zeigen bevorzugte Weiterbildungen der Erfindung.

Bei dem erfindungsgemäßen Ultraschall-Messsystem ist die Ansteuerfrequenz derartig gewählt, dass das Sendesignal eine geeignet frequenzmodulierte Kodierung enthält. Die frequenzmodulierte Kodierung wurde erfindungsgemäß so gewählt, dass eine möglichst große Diskrepanz zwischen dem Sendesignal und dem Ausschwingen existiert.

In einer besonders vorteilhaften Ausführungsform der Erfindung, wird das Sendesignal mittels eines Modulationssignals moduliert, bei dem sich die Frequenz innerhalb eines Frequenzbereichs ändert, der Frequenzwerte umfasst, die sich von der Resonanzfrequenz des resonanten Wandlerelements jeweils unterscheiden. Weiter weist das Modulationssignal eine sich mit der Zeit kontinuierlich ändernde Frequenz auf. Im Gegensatz zur Ansteuerung mit Konstantfrequenz wird der Ultraschallsensor in dieser bevorzugten Ausführungsform der Erfindung so betrieben, dass ein charakteristisches Frequenzgemisch abgestrahlt wird. Weiter vorzugsweise wird als Modulationssignal ein Chirp verwendet, insbesondere ein linearer oder ein nichtlinearer Chirp.

In einer sehr vorteilhafter Ausführungsform der Erfindung ist mindestens ein Korrelationsfilter als digitaler Korrelationsfilter ausgebildet und die Auswerteeinheit umfasst einen Analog-Digital-Wandler oder wenigstens einen Komparator zum Umwandeln eines von dem resonanten Wandlerelement erzeugten Signals in ein digitales Signal und zum Übermitteln des digitalen Signals an den digitalen Korrelationsfilter.

Erfindungsgemäß wird in dem Empfangssignal durch eine geeignete digitale Verarbeitung, insbesondere durch die Verwendung eines digitalen Korrelationsfilters, die Kodierung des Sendesignals detektiert und vom Ausschwingsignal, das die Eigenfrequenz (Resonanzfrequenz) des Wandlers aufweist, getrennt.

Das analoge Empfangsignal wird in ein digitales Signal (A/D) gewandelt und durchläuft anschließend ein digitales signalangepasstes Filter. Dieses Filter ist als digitales Korrelationsfilter, insbesondere als Kreuzkorrelationsfilter oder Optimalfilter umgesetzt.

Ein Echopuls ist nun genau dann vorhanden, wenn das Maß für die Korrelation zwischen dem Sendesignal und dem das Empfangssignal enthaltenen vom resonanten Wandler erzeugten Signal maximal ist, beziehungsweise eine bestimmte Schwelle überschreitet. Dadurch können auch vergleichsweise kleine Echopulse von den deutlich größeren Amplituden des Ausschwingsignals getrennt werden. Als Differenzierungsmerkmal zwischen Echopuls und Ausschwingsignal dient die Signalfrequenz. Die Frequenz des Echopulses spiegelt die modulierte Sendefrequenz wieder, das Ausschwingen des Wandlers erfolgt auf dessen Eigenfrequenz.

Mittels des erfindungsgemäßen Ultraschall-Messsystems werden auch Echos detektierbar, die dem Ausschwingen des Wandlers überlagert sind. Damit lässt sich der Totzeitbereich weiter reduzieren. Durch die hier vorgestellte Messung in dem Nachschwingbereich des resonanten Wandlers lässt sich weiterhin eine Reduzierung der minimalen Reichweite des Ultraschall-Sensors reduzieren.

Die Erfindung lässt sich unabhängig von der gewählten Sendepulsdauer und Sendeamplitude anwenden. Sie führt in jedem Fall zu einer Verkürzung des Ausschwingfensters.

In einer vorteilhaften Ausführung der Erfindung wird das frequenzmodulierte Sendesignal so gewählt, dass sich die Endfrequenz möglichst weit von der Resonanzfrequenz entfernt befindet, so dass die initialen Ausklingamplituden reduziert werden und die Schwingung damit schneller abklingt.

In einer besonders bevorzugten Ausführungsform der Erfindung, bei der ein Chirp als Modulationssignal des Sendesignals verwendet wird, ist das erfindungsgemäße Ultraschall-Messsystem dazu ausgebildet, das Hindernis beim Vorliegen einer mit mindestens einer Relativgeschwindigkeit erfolgten Relativbewegung zwischen dem Ultraschall-Messsystem und dem Hindernis zu detektieren. Dabei wird die Auswerteeinheit dazu ausgebildet, einen Echopuls anhand des von mindestens einem als Korrelationsfilter eingesetzten Optimalfilter erzeugten Korrelationssignals zu erkennen.

Bewegen sich der Sender und/oder ein optional vorhandenes das Signal reflektierende Objekt und/oder der Empfänger relativ zu einander, so findet eine unter dem Begriff Dopplereffekt bekannte spektrale Veränderung der Signale statt. Diese Dopplerverschiebung findet auch bei der Verwendung von Chirps als Modulationssignale statt, deren Trägerfrequenz sich nicht proportional zur Zeit verändert. Solche Chirps werden daher als nichtlineare Chirps bezeichnet. Bei der Verwendung von nichtlinearen Chirps als Modulationssignale werden zur zuverlässigen Detektion des Korrelationsmaximums mehrere, der jeweiligen Relativgeschwindigkeit entsprechende Optimalfilter (Matched Filter) benötigt. Bei der Verwendung von linearen Chirps als Modulationssignale kann trotz Dopplerverschiebung ein Korrelationsmaximum in ein und dem gleichen digitalen Optimalfilter (Matched Filter) bestimmt werden, was die Anwendung dieser Sendesignalform unter diesem speziellen Gesichtspunkt besonders vorteilhaft macht.

Vorzugsweise umfasst die Auswerteeinheit einen Verstärker zum Verstärken des von dem resonanten Wandler erzeugten Signals, wobei der Verstärker dazu ausgebildet ist, eine derartige Verstärkung des von dem resonanten Wandler erzeugten Signals, insbesondere eine derartig reduzierte, konstante Verstärkung des von dem resonanten Wandler erzeugten Signals oder eine derartig mit der Zeit zunehmende, vorzugsweise eine derartig mit der Zeit linear zunehmende, Verstärkung des des von dem resonanten Wandler erzeugten Signals im Ausklingfenster des resonanten Wandlers zu erzeugen, dass keine Übersteuerung des von dem resonanten Wandler erzeugten und verstärkten Signals im Ausklingfenster des resonanten Wandlers oder eine Übersteuerung des von dem resonanten Wandler erzeugten und verstärkten Signals mit einer reduzierter Amplitude im Ausklingfenster des resonanten Wandlers oder eine Übersteuerung des von dem resonanten Wandler erzeugten und verstärkten Signals für einen kürzeren Zeitraum im Ausklingfenster des resonanten Wandlers auftritt.

In manchen Umsetzungen ist eine konstante Verstärkung gewählt. Das kann je nach Verstärkerauslegung oder Auslegung des Analog-Digital-Wandlers (A/D-Wandlerauslegung) zu einer Sättigung bzw. Übersteuerung im Ausklingfenster führen. Die Signalanalyse wird dadurch gestört. Eine vorteilhafte Ausführung der Erfindung ergibt sich entweder durch die Wahl einer konstanten aber reduzierte Verstärkung im Ausklingfenster oder durch die Wahl einer laufzeitabhängigen Verstärkung, insbesondere einer mit der Zeit linear zunehmenden Verstärkung. Die Verstärkung wird erfindungsgemäß derartig gewählt, dass eine Übersteuerung vermieden oder zumindest in der Amplitude reduziert oder auf einen kürzeren Zeitraum begrenzt wird.

Ein weiterer vorteilhafter Effekt der Erfindung ist die Verbesserung des Signals in Vergleich zu den Untergrund-Verhältnissen in einem sogenannten Messfenster, d.h. auch außerhalb des Ausklingfensters. Damit kann sowohl die Erkennung von schwach reflektierenden Objekten verbessert, als auch die maximale Reichweite erhöht werden.

Erfindungsgemäß wird insbesondere ein Fahrzeug mit einem Fahrzeugassistenzsystem mit einem erfindungsgemäße Ultraschall-Messsystem bereitgestellt. Der Fahrer eines solchen Fahrzeuges kann dann beim Erkennen eines Hindernisses frühzeitig gewarnt werden. Insbesondere kann das erfindungsgemäße Fahrzeugassistenzsystem zum Eingreifen in die Fahrzeugdynamik beim Erkennen eines Hindernisses ausgebildet sein. Dadurch wird die Kollisionsgefahr des erfindungsgemäßen Fahrzeugs insbesondere beim Einparken deutlich reduziert.

### Kurze Beschreibung der Zeichnungen

Nachfolgend werden Ausführungsbeispiele der Erfindung unter Bezugnahme auf die begleitende Zeichnungen im Detail beschrieben. In der Zeichnungen ist:
- Figur 1: ein Blockschaltbild einer Auswerteeinheit eines Ultraschall-Systems mit einem resonanten Wandlerelement nach einer ersten Ausführungsform der Erfindung, wobei die Auswerteeinheit eine Steuereinrichtung, einen Verstärker und einen Kreuzkorrelationsfilter umfasst,
- Figur 2: ein von dem Ultraschall-System nach der ersten Ausführungsform der Erfindung erzeugtes Sendesignal mit der entsprechenden Ausschwingphase,
- Figur 3: eine schematische Darstellung eines von dem Ultraschall-System nach der ersten Ausführungsform der Erfindung erzeugten Sendsignals mit einem überlappten, den Echopuls umfassenden Empfangsignal in der Ausschwingphase, und
- Figur 4: ein von dem Korrelationsfilter des Ultraschall-Systems nach der ersten Ausführungsform der Erfindung erzeugte Korrelationssignal, das das von dem resonanten Wandlerelement erzeugte Signal nach der Korrelation mit dem Sendesignal darstellt.

### Ausführungsformen der Erfindung

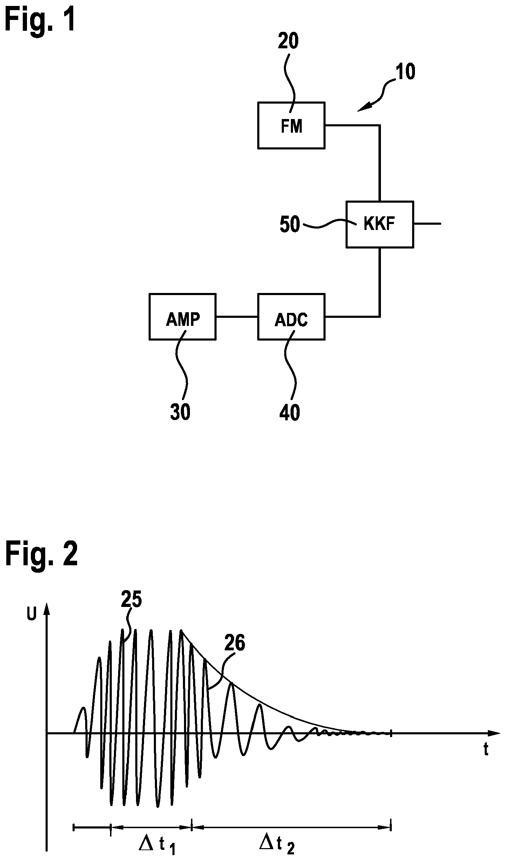

In der Figur 1 ist ein Blockschaltbild einer Auswerteeinheit 10 eines Ultraschall-Messsystems (nicht dargestellt) mit einem resonanten Wandlerelement (nicht dargestellt) nach einer ersten Ausführungsform der Erfindung gezeigt, die eine Steuereinrichtung 20, einen Verstärker 30, einen Analog-Digital-Wandler 40 und einen Kreuzkorrelationsfilter 50 umfasst, wobei in der Steuereinrichtung ein Muster des frequenzmodulierten Sendepulses gespeichert ist.

Der Ultraschall-Sensor (nicht dargestellt) des Ultraschall-Messsystems sendet mittels des resonanten Wandlerelements einen Ultraschallpuls, der an einem Hindernis (nicht dargestellt) reflektiert wird und als Echopuls von dem Ultraschall-Sensor empfangen wird. Dabei erzeugt das resonante Wandlerelement ein Empfangssignal, das den Echopuls umfasst. Da der Ultraschallsensor sich nach der Aussendung des Sendepulses in der Auschwingphase mit seiner Resonanzfrequenz befindet und ein entsprechendes Ausschwingsignal erzeugt, überlagert sich das den Echopuls umfassende Empfangssignal mit den Ausschwingsignal des resonanten Wandlers. Das von dem resonante Wandler erzeugte Signal wird mittels des im Echopfad vorhandenen Verstärkers 30 (AMP) verstärkt und durchläuft dann den auch im Echopfad vorhandenen Analog-Digital-Wandler 40 (ADC), der das analoge, von dem resonanten Wandler erzeugte Signal in ein digitales Signal umwandelt. Alternativ zum ADC 40 können einer oder mehrere Komparatoren vorgesehen sein, um das analoge, vom resonanten Wandler erzeugte Signal in ein digitales Signal umzuwandeln. Das digitalisierte Signal erreicht dann den digitalen Kreuzkorrelationsfilter 50, von dem es mit dem frequenzmodulierten Sendepuls korreliert wird.

Resonante Wandler haben den Nachteil, dass sie eine relativ lange Ausschwingphase aufweisen und nach dem Stand der Technik während dieser Ausschwingsphase blind für den Empfang sind. Insbesondere sind die gemessenen Amplituden in der Ausschwingphase durch die bestehenden Verstärkerschaltungen gesättigt, d.h. abgeschnitten. Durch die Wahl eines Sendesignals, das eine Signatur aufweist, welche sich von der Resonanzsignatur unterscheidet, und durch die Verwendung eines geeigneten Korrelationsfilters 50 (Optimalfilter) im Empfangspfad, kann in den Sättigungsbereich reingemessen werden, so dass sich die minimale Reichweite trotz längerer Pulse gegenüber der aus dem Stand der Technik bekannten deutlich verbessert. Aus dem Stand der Technik sind Ultraschall-Sensoren bekannt, die eine Pulsdauer von 300 µs und eine minimale Reichweite von 20 cm aufweisen. Bei dem erfindungsgemäßen Ultraschall-Sensor wurde eine Pulsdauer von 500 µs und eine minimale Reichweite von 15 cm nachgewiesen.

In Figur 2 dargestellt, ist die zeitliche Abhängigkeit eines von dem Ultraschall-Messsystem nach der ersten Ausführungsform der Erfindung erzeugten Sendesignals 25 mit der entsprechenden Ausschwingphase. Dabei ist das Sendesignal 25 mittels eines Chirps moduliert worden, der eine sich mit der Zeit kontinuierlich ändernde Frequenz in einem Frequenzbereich aufweist, der Frequenzwerte umfasst, die sich jeweils von der Resonanzfrequenz des resonanten Wandlers unterscheiden.

Das Sendesignal 25 mit dem entsprechende Ausschwingsignal 26 sind als Spannung U in Abhängigkeit von der Zeit t dargestellt. Das Sendesignal 25 wird während der Zeitperiode Δt₁ ausgesendet. Das Ausschwingsignal 26 erstreckt sich über die Zeitperiode Δt₂.

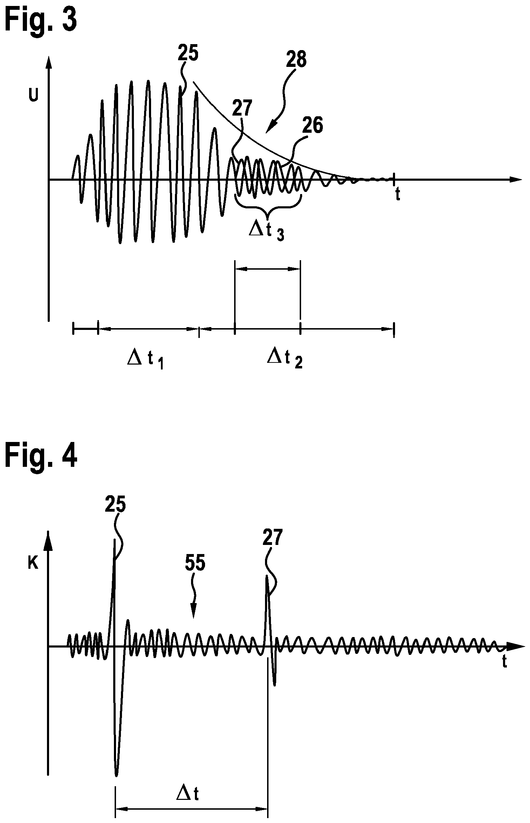

Die Figur 3 zeigt das von dem Ultraschall-System nach der ersten Ausführungsform der Erfindung erzeugte Sendsignal 25 und das Ausschwingsignal 26 mit einem überlagerten, den Echopuls umfassenden, Empfangssignal 27 in einer schematischen Darstellung. Das Sendesignal 25 mit dem entsprechenden Ausschwingsignal 26 sind, so wie in der Figur 1 auch, als Spannung U in Abhängigkeit von der Zeit t dargestellt. Das Sendesignal 25 wird während der Zeitperiode Δt₁ ausgesendet. Das Ausschwingsignal 26 verläuft während der Zeitperiode Δt₂. Während der Zeitperiode Δt₃, die innerhalb der Zeitperiode Δt₂ liegt, überlagert sich das den Echopuls umfassende Empfangssignal 27 mit dem Ausklingsignal 26 und erzeugt so ein von dem Wandler erzeugtes Signal 28.

In der Figur 4 ist ein von dem Korrelationsfilter 50 des Ultraschall-Systems nach der ersten Ausführungsform der Erfindung erzeugtes Korrelationssignal 55 dargestellt, das dem von dem resonanten Wandler erzeugten Signal 28 nach der Korrelation mit dem Sendesignal 25 entspricht.

Das von dem resonanten Wandler erzeugte Signal 28 umfasst das den Echopuls umfassende Empfangssignal 27 und das Ausschwingsignal 26.

In der Figur 4 ist das Korrelationssignal 55 (K) als Funktion der Zeit t dargestellt.

Das Korrelationssignal 55 zeigt zwei Maximumstellen. An der ersten Maximumstelle ist das Sendesignal 25 und an dem zweiten Maximumstelle ist das den Echopuls umfassende Empfangssignal 27 zu finden. Der zeitliche Abstand Δt zwischen den zwei Maximumstellen stellt die abgelaufene Zeit zwischen dem abgesandten Ultraschallpuls und dem empfangenen Echopuls dar.

Neben der voranstehenden schriftlichen Offenbarung wird hiermit zur weiteren Offenbarung der Erfindung ergänzend auf die Darstellung in den Figuren 1 bis 4 Bezug genommen.

## Patentansprüche

1. Ultraschall-Messsystem zum Detektieren eines Hindernisses mit einem Ultraschallsensor mit einem resonanten Wandlerelement zum Aussenden eines Ultraschallpulses und zum Erzeugen eines Empfangssignals (27), das den von dem Hindernis reflektierten, als Echopuls bezeichneten Ultraschallpuls umfasst, wobei das resonante Wandlerelement nach Aussenden des Ultraschallpulses weiter ein Ausschwingsignal (26) mit seiner Resonanzfrequenz erzeugt, und mit einer Auswerteeinheit (10) mit einer Steuereinrichtung (20), die dazu ausgebildet ist, das resonante Wandlerelement zum Ausenden des Ultraschallpulses mittels eines von der Steuereinrichtung (20) erzeugten Sendesignals (25) anzusteuern, wobei die Steuereinrichtung (20) dazu ausgebildet ist, ein frequenzmoduliertes Sendesignal (25) mittels eines Modulationssignals so zu erzeugen, dass sich die Signatur des Ultraschallpulses von der des Ausschwingsignals unterscheidet, die Auswerteeinheit mindestens einen Korrelationsfilter (50) umfasst, wobei der mindestens eine Korrelationsfilter (50) dazu ausgebildet ist, das vom resonanten Wandlerelement erzeugte Signal (28) mit dem Sendesignal (25) zu korrelieren und dabei ein entsprechendes Korrelationssignal (55) zu erzeugen, und die Auswerteeinheit (10) dazu ausgebildet ist, den Echopuls beim Vorliegen eines einen Schwellenwert überschreitenden Pegels oder eines Maximums des Korrelationssignals (55) zu erkennen und einen Abstand zum Hindernis aus einer Zeitperiode (Δt) zwischen dem ausgesandten Ultraschallpuls und dem empfangenen Echopuls und der Ultraschallgeschwindigkeit zu berechnen, **dadurch gekennzeichnet,**
**dass** sich die Frequenz des Modulationssignals kontinuierlich mit der Zeit ändert, wobei die Steuereinrichtung (20) dazu ausgebildet ist, das frequenzmodulierte Sendesignal (25) mittels eines Chirps als Modulationssignal zu erzeugen, wobei die Auswerteeinheit (10) dazu ausgebildet ist, ein Hindernis beim Vorliegen einer mit mindestens einer Relativgeschwindigkeit erfolgten Relativbewegung zwischen dem Ultraschall-Messsystem und dem Hindernis anhand des von mindestens einem Korrelationsfilter (50) erzeugten Korrelationssignals (55) zu detektieren.

2. Ultraschall-Messsystem nach Anspruch 1, **dadurch gekennzeichnet, dass** sich die Frequenz des Modulationssignals innerhalb eines Frequenzbereichs ändert, der Frequenzwerte umfasst, die sich von der Resonanzfrequenz des resonanten Wandlerelements jeweils unterscheiden.

3. Ultraschall-Messsystem nach einem der Ansprüche 1 bis 2, **dadurch gekennzeichnet, dass** mindestens ein Korrelationsfilter (50) als digitaler Korrelationsfilter (50) ausgebildet ist und die Auswerteeinheit (10) weiter einen Analog-Digital-Wandler (40) oder wenigstens einen Komparator umfasst, wobei der Analog-Digital-Wandler (40) bzw. der wenigstens eine Komparator dazu ausgebildet ist, das von dem resonanten Wandlerelement erzeugte Signal (28) in ein digitales Signal umzuwandeln und das digitale Signal an den digitalen Korrelationsfilter (50) zu übermitteln.

4. Ultraschall-Messsystem nach einem der vorangehenden Ansprüche, **dadurch gekennzeichnet, dass** mindestens ein Korrelationsfilter (50) ein Kreuzkorrelationsfilter (50), insbesondere ein Optimalfilter (50) ist.

5. Ultraschall-Messsystem nach einem der vorangehenden Ansprüche, **dadurch gekennzeichnet, dass** die Auswerteeinheit (10) einen Verstärker (30) zum Verstärken des von dem resonanten Wandlerelement erzeugten Signals (28) umfasst, wobei der Verstärker (30) dazu ausgebildet ist, eine derartige Verstärkung des von dem resonanten Wandlerelement erzeugten Signals (28), insbesondere eine derartig reduzierte, konstante Verstärkung des von dem resonanten Wandlerelement erzeugten Signals (28) oder eine derartig mit der Zeit zunehmende, vorzugsweise eine derartig mit der Zeit linear zunehmende, Verstärkung des von dem resonanten Wandlerelement erzeugten Signals (28) im Ausklingfenster (Δt₂) des resonanten Wandlers zu erzeugen, dass keine Übersteuerung des von dem resonanten Wandlerelement erzeugten und verstärkten Signals im Ausklingfenster (Δt₂) des resonanten Wandlerelements oder eine Übersteuerung des von dem resonanten Wandlerelement erzeugten und verstärkten Signals mit einer reduzierter Amplitude im Ausklingfenster (Δt₂) des resonanten Wandlerelements oder eine Übersteuerung des von dem resonanten Wandlerelement erzeugten und verstärkten Signals für einen kürzeren Zeitraum im Ausklingfenster (Δt₂) des resonanten Wandlerelements auftritt.

6. Verfahren zum Detektieren eines Hindernisses mittels Ultraschall, bei dem ein Ultraschallpuls mittels eines resonanten Wandlerelements ausgesendet wird, ein Empfangssignal (27), das den von dem Hindernis reflektierten, als Echopuls bezeichneten, Ultraschallpuls umfasst, mittels des resonanten Wandlerelements erzeugt wird, wobei nach dem Aussenden des Ultraschallpulses von dem resonanten Wandlerelement ein Ausschwingsignal (26) mit der Resonanzfrequenz des resonanten Wandlerelements erzeugt wird, und ein Sendesignal (25) erzeugt wird, mit dem das resonante Wandlerelement zum Aussenden des Ultraschallpulses angesteuert wird, wobei das Sendesignal (25) mittels eines Modulationssignals so moduliert wird, dass sich die Signatur des Ultraschallpulses von der des Ausschwingsignals unterscheidet, das vom resonanten Wandlerelement erzeugte Signal (28) mit dem Sendesignal korreliert wird, um ein entsprechendes Korrelationssignal (55) zu erhalten, und der Echopuls beim Vorliegen eines einen Schwellenwert überschreitenden Pegels oder eines Maximums des Korrelationssignals (55) erkannt wird und ein Abstand zum Hindernis aus einer Zeitperiode (Δt) zwischen dem ausgesandten Ultraschallpuls und dem empfangenen Echopuls und der Ultraschallgeschwindigkeit berechnet wird, **dadurch gekennzeichnet,**
**dass** die Frequenz des Modulationssignals kontinuierlich mit der Zeit geändert wird, wobei das frequenzmodulierte Sendesignal (25) mittels eines Chirps als Modulationssignal erzeugt wird, wobei das Hindernis beim Vorliegen einer mit mindestens einer Relativgeschwindigkeit erfolgten Relativbewegung zwischen dem Ultraschall-Messsystem und dem Hindernis anhand des mittels der Korrelationsfunktion mindestens eines Korrelationsfilters (50) erzeugten Korrelationssignals (55) detektiert wird.

7. Verfahren nach Anspruch 6, **dadurch gekennzeichnet, dass** sich die Frequenz des Modulationssignals innerhalb eines Frequenzbereichs ändert, der Frequenzwerte umfasst, die sich von der Resonanzfrequenz des resonanten Wandlerelements jeweils unterscheiden.

8. Verfahren nach einem der Ansprüche 6 oder 7, **dadurch gekennzeichnet, dass** das von dem resonanten Wandlerelement erzeugte Signal (28) mittels einer derartigen Verstärkung, insbesondere einer reduzierten, konstanten Verstärkung oder einer mit der Zeit zunehmenden, vorzugsweise mit der Zeit linear zunehmenden Verstärkung, verstärkt wird, dass keine Übersteuerung des von dem resonanten Wandlerelement erzeugten und verstärkten Signals im Ausklingfenster (Δt₂) des resonanten Wandlerelements oder eine Übersteuerung des von dem resonanten Wandlerelement erzeugten und verstärkten Signals mit einer reduzierter Amplitude im Ausklingfenster (Δt₂) des resonanten Wandlerelements oder eine Übersteuerung des von dem resonanten Wandlerelement erzeugten und verstärkten Signals für einen kürzeren Zeitraum im Ausklingfenster (Δt₂) des resonanten Wandlerelements auftritt.

9. Fahrzeug mit einem Fahrzeugassistenzsystem mit einem Ultraschall-Messsystem nach einem der Ansprüche 1 bis 5.

## Claims

1. Ultrasonic measurement system for detecting an obstacle, having an ultrasonic sensor with a resonant transducer element for emitting an ultrasonic pulse and for generating a reception signal (27) comprising the ultrasonic pulse which is reflected by the obstacle and is referred to as an echo pulse, wherein, after emitting the ultrasonic pulse, the resonant transducer element also generates a decay signal (26) at its resonant frequency, and having an evaluation unit (10) with a control device (20) which is designed to control the resonant transducer element to emit the ultrasonic pulse by means of a transmission signal (25) generated by the control device (20), wherein the control device (20) is designed to generate a frequency-modulated transmission signal (25) by means of a modulation signal in such a manner that the signature of the ultrasonic pulse differs from that of the decay signal, the evaluation unit comprises at least one correlation filter (50), wherein the at least one correlation filter (50) is designed to correlate the signal (28) generated by the resonant transducer element with the transmission signal (25) and to generate a corresponding correlation signal (55) in the process, and the evaluation unit (10) is designed to detect the echo pulse when a level exceeding a threshold value or a maximum of the correlation signal (55) is present and to calculate a distance to the obstacle from a time period (Δt) between the emitted ultrasonic pulse and the received echo pulse and from the ultrasonic speed,
**characterized**
**in that** the frequency of the modulation signal changes continuously with time, wherein the control device (20) is designed to generate the frequency-modulated transmission signal (25) by means of a chirp as the modulation signal, wherein the evaluation unit (10) is designed to detect an obstacle when there is a relative movement at at least one relative speed between the ultrasonic measurement system and the obstacle on the basis of the correlation signal (55) generated by the at least one correlation filter (50).

2. Ultrasonic measurement system according to Claim 1, **characterized in that** the frequency of the modulation signal changes within a frequency range comprising frequency values each differing from the resonant frequency of the resonant transducer element.

3. Ultrasonic measurement system according to one of Claims 1 to 2, **characterized in that** at least one correlation filter (50) is in the form of a digital correlation filter (50), and the evaluation unit (10) also comprises an analogue/digital converter (40) or at least one comparator, wherein the analogue/digital converter (40) or the at least one comparator is designed to convert the signal (28) generated by the resonant transducer element into a digital signal and to transmit the digital signal to the digital correlation filter (50).

4. Ultrasonic measurement system according to one of the preceding claims, **characterized in that** at least one correlation filter (50) is a cross-correlation filter (50), in particular an optimal filter (50).

5. Ultrasonic measurement system according to one of the preceding claims, **characterized in that** the evaluation unit (10) comprises an amplifier (30) for amplifying the signal (28) generated by the resonant transducer element, wherein the amplifier (30) is designed to generate a gain of the signal (28) generated by the resonant transducer element, in particular a reduced constant gain of the signal (28) generated by the resonant transducer element, or a gain of the signal (28) generated by the resonant transducer element which increases with time, preferably increases linearly with time, in the decay window (Δt₂) of the resonant transducer such that the signal generated and amplified by the resonant transducer element is not overdriven in the decay window (Δt₂) of the resonant transducer element or the signal generated and amplified by the resonant transducer element is overdriven with a reduced amplitude in the decay window (Δt₂) of the resonant transducer element or the signal generated and amplified by the resonant transducer element is overdriven for a shorter period in the decay window (Δt₂) of the resonant transducer element.

6. Method for detecting an obstacle by means of ultrasound, in which an ultrasonic pulse is emitted by means of a resonant transducer element, a reception signal (27) comprising the ultrasonic pulse which is reflected by the obstacle and is referred to as an echo pulse is generated by means of the resonant transducer element, wherein, after emitting the ultrasonic pulse, the resonant transducer element generates a decay signal (26) at the resonant frequency of the resonant transducer element, and a transmission signal (25) is generated and is used to control the resonant transducer element to emit the ultrasonic pulse, wherein the transmission signal (25) is modulated by means of a modulation signal in such a manner that the signature of the ultrasonic pulse differs from that of the decay signal, the signal (28) generated by the resonant transducer element is correlated with the transmission signal in order to obtain a corresponding correlation signal (55), and the echo pulse is detected if a level exceeding a threshold value or a maximum of the correlation signal (55) is present, and a distance to the obstacle is calculated from a time period (Δt) between the emitted ultrasonic pulse and the received echo pulse and from the ultrasonic speed, **characterized in that** the frequency of the modulation signal is changed continuously with time, wherein the frequency-modulated transmission signal (25) is generated by means of a chirp as the modulation signal, wherein the obstacle is detected if there is a relative movement at at least one relative speed between the ultrasonic measurement system and the obstacle on the basis of the correlation signal (55) generated by means of the correlation function of at least one correlation filter (50).

7. Method according to Claim 6, **characterized in that** the frequency of the modulation signal changes within a frequency range comprising frequency values each differing from the resonant frequency of the resonant transducer element.

8. Method according to either of Claims 6 and 7, **characterized in that** the signal (28) generated by the resonant transducer element is amplified by means of a gain, in particular a reduced constant gain or a gain which increases with time, preferably increases linearly with time, such that the signal generated and amplified by the resonant transducer element is not overdriven in the decay window (Δt₂) of the resonant transducer element or the signal generated and amplified by the resonant transducer element is overdriven with a reduced amplitude in the decay window (Δt₂) of the resonant transducer element or the signal generated and amplified by the resonant transducer element is overdriven for a shorter period in the decay window (Δt₂) of the resonant transducer element.

9. Vehicle having a vehicle assistance system having an ultrasonic measurement system according to one of Claims 1 to 5.

## Revendications

1. Système de mesure à ultrasons pour la détection d'un obstacle, comportant un capteur à ultrasons muni d'un élément convertisseur résonant destiné à émettre une impulsion ultrasonore et à générer un signal de réception (27) qui comprend l'impulsion ultrasonore réfléchie par l'obstacle, désignée impulsion d'écho, dans lequel l'élément convertisseur résonant génère en outre, après l'émission d'une impulsion ultrasonore, un signal d'amortissement (26) ayant sa fréquence de résonance, et comportant une unité d'évaluation (10) munie d'un dispositif de commande (20) conçu pour commander l'élément convertisseur résonant au moyen d'un signal d'émission (25) généré par le dispositif de commande (20) pour émettre l'impulsion ultrasonore, dans lequel le dispositif de commande (20) est conçu pour générer un signal d'émission (25) modulé en fréquence au moyen d'un signal de modulation de manière à ce que la signature de l'impulsion ultrasonore soit différente de celle du signal d'amortissement, l'unité d'évaluation comprend au moins un filtre de corrélation (50), dans lequel ledit au moins un filtre de corrélation (50) est conçu pour corréler le signal (28) généré par l'élément convertisseur résonant avec le signal d'émission (25) et pour ainsi générer un signal de corrélation (55) correspondant, et l'unité d'évaluation (10) est conçue pour détecter l'impulsion d'écho en présence d'un niveau dépassant une valeur de seuil ou d'un maximum du signal de corrélation (55) et pour calculer une distance par rapport à l'obstacle à partir d'un intervalle de temps (Δt) entre l'impulsion ultrasonore émise et l'impulsion d'écho reçue et de la vitesse des ultrasons,
**caractérisé en ce que** la fréquence du signal de modulation varie en continu au cours du temps, dans lequel le dispositif de commande (20) est conçu pour générer le signal d'émission modulé en fréquence (25) au moyen d'une rampe de fréquence en tant que signal de modulation, dans lequel l'unité d'évaluation (10) est conçue pour détecter un obstacle lors de la présence d'un mouvement relatif effectué à au moins une vitesse relative entre le système de mesure à ultrasons et l'obstacle sur la base du signal de corrélation (55) généré par ledit au moins un filtre de corrélation (50) .

2. Système de mesure à ultrasons selon la revendication 1, **caractérisé en ce que** la fréquence du signal de modulation varie à l'intérieur d'une plage de fréquences qui comprend des valeurs de fréquences respectivement différentes de la fréquence de résonance de l'élément convertisseur résonant.

3. Système de mesure à ultrasons selon l'une des revendications 1 à 2, **caractérisé en ce qu'**au moins un filtre de corrélation (50) est réalisé sous la forme d'un filtre de corrélation numérique (50) et **en ce que** l'unité d'évaluation (10) comprend en outre un convertisseur analogique-numérique (40) ou au moins un comparateur, dans lequel le convertisseur analogique-numérique (40) ou ledit au moins un comparateur est conçu pour convertir le signal (28) généré par l'élément convertisseur résonant en un signal numérique et pour transmettre le signal numérique au filtre de corrélation numérique (50).

4. Système de mesure à ultrasons selon l'une des revendications précédentes, **caractérisé en ce qu'**au moins un filtre de corrélation (50) est un filtre de corrélation croisée (50), notamment un filtre optimal (50) .

5. Système de mesure à ultrasons selon l'une des revendications précédentes, **caractérisé en ce que** l'unité d'évaluation (10) comprend un amplificateur (30) destiné à amplifier le signal (28) généré par l'élément convertisseur résonant, dans lequel l'amplificateur (30) est conçu pour générer une amplification du signal (28) généré par l'élément convertisseur résonant, en particulier une amplification réduite constante du signal (28) généré par l'élément convertisseur résonant ou une amplification augmentant au cours du temps, et augmentant de préférence linéairement au cours du temps, du signal (28) généré par l'élément convertisseur résonant dans une fenêtre d'affaiblissement (Δt₂) du convertisseur résonant, qui est telle qu'il ne se produit aucune surmodulation du signal amplifié et généré par l'élément convertisseur résonant dans la fenêtre d'affaiblissement (Δt₂) de l'élément convertisseur résonant ou qu'il se produit une surmodulation du signal généré et amplifié par l'élément convertisseur résonant avec une amplitude réduite dans la fenêtre d'affaiblissement (Δt₂) de l'élément convertisseur résonant ou qu'il se produit une surmodulation du signal généré et amplifié par l'élément convertisseur résonant au cours d'une courte période de temps dans la fenêtre d'affaiblissement (Δt₂) de l'élément convertisseur résonant.

6. Procédé destiné à détecter un obstacle au moyen d'ultrasons, dans lequel une impulsion ultrasonore est émise au moyen d'un élément convertisseur résonant, un signal de réception (27) qui comprend l'impulsion ultrasonore réfléchie par l'obstacle et désigné impulsion d'écho, est généré au moyen de l'élément convertisseur résonant, dans lequel, après l'émission de l'impulsion ultrasonore par l'élément convertisseur résonant, un signal d'amortissement (26) est généré ayant la fréquence de résonance de l'élément convertisseur résonant, et un signal d'émission (25) est généré, avec lequel l'élément convertisseur résonant est commandé pour émettre l'impulsion ultrasonore, dans lequel le signal d'émission (25) est modulé au moyen d'un signal de modulation de manière à ce que la signature de l'impulsion ultrasonore soit différente de celle du signal d'amortissement, le signal (28) généré par l'élément convertisseur résonant est corrélé avec le signal d'émission afin d'obtenir un signal de corrélation (55) correspondant, et l'impulsion d'écho est détectée en présence d'un niveau dépassant une valeur de seuil ou d'un maximum du signal de corrélation (55), une distance par rapport à l'obstacle est calculée à partir d'un intervalle de temps (Δt) entre l'impulsion ultrasonore émise et l'impulsion d'écho reçue et de la vitesse des ultrasons est calculée,
**caractérisé en ce que** la fréquence du signal de modulation est modifiée en continu au cours du temps, dans lequel le signal d'émission (25) modulé en fréquence est généré au moyen d'une rampe de fréquence en tant que signal de modulation, dans lequel l'obstacle est détecté lors de la présence d'un mouvement relatif effectué à au moins une vitesse relative entre le système de mesure à ultrasons et l'obstacle sur la base du signal de corrélation (55) généré au moyen de la fonction de corrélation d'au moins un filtre de corrélation (50).

7. Procédé selon la revendication 6, **caractérisé en ce que** la fréquence du signal de modulation varie à l'intérieur d'une plage de fréquences qui comprend des valeurs de fréquences respectivement différentes de la fréquence de résonance de l'élément convertisseur résonant.

8. Procédé selon l'une des revendications 6 ou 7, **caractérisé en ce que** le signal (28) généré par l'élément convertisseur résonant est amplifié au moyen d'une amplification, notamment d'une amplification réduite constante ou d'une amplification augmentant au cours du temps, et augmentant de préférence linéairement au cours du temps, telle qu'il ne se produit aucune surmodulation du signal généré et amplifié par l'élément convertisseur résonant dans la fenêtre d'affaiblissement (Δt₂) de l'élément convertisseur résonant, ou qu'il se produit une surmodulation du signal généré et amplifié par l'élément convertisseur résonant avec une amplitude réduite dans la fenêtre d'affaiblissement (Δt₂) de l'élément convertisseur résonant ou qu'il se produit une surmodulation du signal généré et amplifié par l'élément convertisseur résonant au cours d'une courte période de temps dans la fenêtre d'affaiblissement (Δt₂) de l'élément convertisseur résonant.

9. Véhicule comportant un système d'assistance au conducteur muni d'un système de mesure à ultrasons selon l'une des revendications 1 à 5.
